# EUROPEAN PATENT APPLICATION

(11) **EP 4 823 008 A1**
(43) Date of publication of application: **14.10.2026**
(21) Application number: 25382370.2
(22) Date of filing: 09.04.2025
(51) Int. Cl.: H04B 7/185, H04W 16/14

(54) **METHOD AND COGNITIVE RADIOCOMMUNICATION SYSTEM FOR AERONAUTICAL WIRELESS COMMUNICATIONS**

(71) Applicant: Airbus Defence and Space, S.A.U., 28906 Getafe - Madrid (ES)
(72) Inventor: Gómez Calero, Carlos, 28906 Getafe (ES); García Verdejo, Óscar, 28906 Getafe (ES)
(74) Representative: Elzaburu S.L.P.

(57) **Abstract**

Cognitive radiocommunication system for aerial platforms comprising: an antenna system (1) including radiating elements (5); radiofrequency transmitter-receiver unit (2) configured for receiving and transmitting radio beams (6/6'). The incident radio beams are managed by a cognitive signal processor (4), which includes a spectrum sensing module (12) for detecting and classifying signals in the received beams (6); a spectrum prediction module (13) for finding trends in the spectrum, and a spectrum decision module (14) for allocating resources to the cognitive network nodes. The radiocommunication module may also comprise a sharing module (15) use to exchange information among users inside the network. The processor also includes a cognitive transceiver (16) to generate a transmission beam with payload user data (11') using the decision taken, and to receive the payload user data (11) inside the received signals (10).

## Description

### Technical field

The present invention belongs to the technical field of telecommunications.

More particularly, this invention is related to a cognitive radiocommunication system and a method for aeronautical communications which can be used, for example and without being limitative, as an on-board communication module in an aircraft and which is capable of a more efficient spectrum usage of broadband communications.

The present invention also refers to a cognitive radiocommunication system for air-to-air, air-to-ground and/or air-to-space communications.

### Background of the invention

Most of the radio systems which are traditionally used in the aeronautical environment operate within predefined frequency bands allocated by regulatory bodies. These systems are designed to transmit and receive signals within these fixed frequency ranges, with little to no capability for dynamic adaptation to changes in the radio frequency (RF) spectrum. This static allocation of spectrum leads to significant inefficiencies in spectrum utilization, as large portions of the allocated bands often remain underutilized for extended periods.

Moreover, in today's increasingly congested RF spectrum traditional radios face a multitude of challenges that compromise their performance and reliability. For example, interference from neighboring transmissions and co-channel users is a prevalent issue, resulting in reduced signal quality and increased error rates. In areas with high wireless device density, such interference can severely degrade communication links, leading to dropped connections, packet loss, and overall degradation of user experience. Another critical limitation of traditional radio systems is their lack of flexibility and adaptability to response to the changes in the RF spectrum. These radios typically operate with fixed parameters such as transmission power, modulation scheme, and channel access protocols, which are set during initial configuration or statically programmed into the device firmware. As a consequence, they lack the necessary tools to cope with dynamic changes in channel conditions, traffic loads, or spectrum availability.

This deficiency in adaptability not only impedes the performance of individual radio systems but also imply inefficient spectrum utilization at a larger scale.

Furthermore, the static allocation of spectrum bands means the traditional radio systems are unable to exploit transient opportunities for spectrum access. In many cases, portions of the allocated spectrum remain unutilized for significant periods of time due to factors such as temporal variations in RF activity, geographical variations in demand, or regulatory restrictions.

In response to these limitations of the technique, cognitive radiocommunication (CR) systems have been recently developed.

CR systems aim to improve spectrum efficiency by utilizing novel techniques to sense and adapt to the radio frequency (RF) environment, making efficient use of the available spectrum resources. Several CR systems has been proposed in the last years, including radio apparatuses, such as those described in patent US8.897.715. Also Protocol Reference Models from architecture of layers point of view, as described for example in patent US8.442.445 and CR systems powered by machine learning and having adaptable characteristics, as disclosed in patent US8.929.936.

From a technical point of view, one of the main areas of research has been the development of efficient and reliable spectrum sensing algorithms, as disclosed by Liu, Y. et Al, in "A Survey of Spectrum Sensing Algorithms Based on Machine Learning". In: Xiong, N., Li, M., Li, K., Xiao, Z., Liao, L., Wang, L. (eds) Advances in Natural Computation, Fuzzy Systems and Knowledge Discovery.

Several cognitive radio systems include the use of machine learning techniques for channel selection, spectrum assignment, and power transmission optimization, for example those described disclosed by M. Bkassiny, et Al. in "a Survey on Machine-Learning Techniques in Cognitive Radios," in IEEE Communications Surveys & Tutorials, vol. 15, no. 3, pp. 1136-1159, Third Quarter 2013. These techniques allow CR systems to learn from the RF environment and to adapt its transmission parameters accordingly, leading to improved performance and increased spectrum utilization.

Additionally, new communication protocols are being researched that can fully exploit the capabilities of CR. Thus, patent application US20090268619 proposes a system to classify incoming signal to a CR system.

Other techniques and methods have been proposed to detect and classify signals, one of the major key points of CR systems. Techniques such as energy detection, matched filtering, and cyclostationary feature detection have been proposed and improved to enhance the performance of CR systems for example in patent US8055204.

Apart from the use of CR systems in civil applications, CR technology has also the potential to provide significant benefits in military scenarios, particularly in terms of communication and networking capabilities, as disclosed for example by F. W. Seelig in "a Description of the August 2006 XG Demonstrations at Fort A.P. Hill," 2007 2nd IEEE International Symposium on New Frontiers in Dynamic Spectrum Access Networks, Dublin, Ireland, 2007, pages. 1-12, doi: 10.1109/DYSPAN.2007.10.

One of the main advantages of CR in military scenarios is its ability to adapt to changing environments and dynamically adjust its transmission parameters. This allows military units to maintain communication in challenging environments where traditional communication systems may fail. Additionally, CR technology can be used to detect and avoid interference from enemy jamming, which is a major concern for military communications. The use of CR in military operations has been studied by NATO in NORTH ATLANTIC TREATY ORGANIZATION, "Cognitive Radio in NATO", AC/323(IST-077)TP/497, Jan 2014., identifying clear benefits of it:
- Improved spectrum utilization in a densely populated theatre, in scenarios with a high degree of dynamics, scenarios with a-priori unknown sources of interference and scenarios in which the interference varies in amplitude and frequency over time.
- Allows dynamic, operation-adapted spectrum assignment to take place.
- Handles very well static and slow dynamic interference sources in the theatre of operation.
- Networks of CRs may obtain a unified view of ESM (Electronic Support Measures) in its area of operation.
- A network of CRs may use its accumulated information on its own communication needs together with its unified ESM (Electronic Support Measures) view to synthesize intelligent EW.

Another major benefit of CR technology is its ability to improve spectrum utilization. Depending on the use case, the use of multiple communication systems, each operating on different frequency bands, is often required. CR technology can be used to dynamically assign and reassign spectrum resources to different communication systems, ensuring that they are used efficiently and effectively. Another area of research has been the development of efficient and secure communication protocols for CR. Dynamic Spectrum Access (DSA) disclosed for example in patent US8.699.430 is a key technology that allows CR to adapt to different RF environments and communicate with other devices while ensuring security and privacy.

Nevertheless, there is not much research regarding the use of cognitive radio systems with respect to civil and military aircraft environments, since transmission conditions in an aircraft differ considerably from ground traditional ones. In fact, the aircraft environment changes the RF spectrum very fast, which entails a challenge in improving the signal quality in radio systems. Thus, aircraft applications have to deal with many scenarios' limitations with additional constraints due to the three dimensional and fast-changing RF environment, because of the aircraft high altitude position and its speed. This makes a real challenge for an airborne cognitive radio system design, including information sharing among the assets of the network.

Moreover, in military applications CR systems may face intelligent jamming techniques from adversaries and/or hostile RF environment in order to avoid or mitigate jamming from enemies.

### Summary of the invention

With the aim of providing a solution to the abovementioned problems, a first object of the present invention refers to a cognitive radiocommunication system intended to be used in an aeronautical cognitive radiocommunication network, characterized in that said cognitive radiocommunication system is housed in an aircraft and comprises:
- an antenna system, including at least one radiating element;
- at least one radiofrequency transmitter-receiver unit; connected to a cognitive signal processor and configured -when the radiocommunication system acts as a receiver- for receiving an incident radio beam and send it to the cognitive signal processor and being also configured -when the radiocommunication system acts as a transmitter- for receiving at least one transmission signal from the cognitive signal processor an send it to the antenna system for generating a transmitted radio beam;
- a cognitive signal processor; provided at least with the following modules:
   i) a spectrum sensing module, for analyzing the spectrum of each incident radio beam, identifying and classifying received signals while detecting unused bandwidth within the radio spectrum;
   ii) a spectrum prediction module, for finding trends in the radio spectrum, based on the information obtained by the spectrum sensing module; and
   iii) a spectrum decision module, for determining a distribution for the available radio spectrum depending on the cognitive radiocommunication network transmission demand and the information obtained by the spectrum sensing and prediction modules and for configuring one or more cognitive transceivers, by providing cognitive transceivers with the modulation and codification parameters which will be used for generating -when the radiocommunication system acts as a transmitter- the transmitted signal, and for configuring -when the radiocommunication system acts as a receiver- cognitive transceivers with said modulation and coding parameters;
- a cognitive transceiver, configured -when the radiocommunication system acts as transmitter- for generating a transmission signal for each radio beam to be transmitted using as input the output of the spectrum decision module and data to be transmitted and - when the radiocommunication system acts as receiver - for decoding the incident radio beam using as input the incident radio beam and the information coming from outputs of the spectrum decision module.

The cognitive radiocommunication system of the present invention can be used, for example, for air-to-air, air-to-ground and/or air-to-space communications.

Moreover, the cognitive system of the present invention preferably is able to acquire information from other aircraft systems and to store useful data coming from the cognitive processor. In addition, the cognitive signal processor might have access to a database in which radio frequency policies, regulation and constraints are stored. This information might be used by the spectrum decision module.

On the other hand, each of the above mentioned modules (cognitive signal processor and cognitive transceiver) might use Artificial intelligence (AI) for its functionality, applying at least one machine learning or deep learning model, among others, for the spectrum detection, selection or signal processing and corrections.

The cognitive radiocommunication system according to the present invention provides an adaptive high data transmittal rate, since it is capable of identifying and classifying the radiofrequency spectrum and taking advantage of the potential radio frequency spectrum opportunities (that is, bandwidth of the radio spectrum in which no signal is being transmitted at a specific time and space direction). The cognitive radiocommunication system of the present invention is able to decide the most suitable link communication configuration through the processing of the sensing output. To that end, the spectrum decision module is preferably capable of choosing among other possible parameters: the radiation pattern of each radio beam, transmitted power, waveform of each radio beam and resource allocation.

Preferably, the antenna system includes at least two radiating elements (5). In addition, each radiating element (5), and at least one of the transceiver radiofrequency transmitter-receiver units of the cognitive radiocommunication system according to the invention, comprises a beamforming module, said beamforming module being configured -when the cognitive radiocommunication system acts as transmitter- for generating parallel radio beams pointing at specific directions. On the other hand, the beamforming module is configured -when the cognitive radiocommunication system acts as a receiver- for generating independent signal samples corresponding to different radiation patterns (different directions) representing each radio beam. In the receiver chain, these independent received signal samples which are filtered at predefined bandwidths and down converted to an intermediate frequency before being sent to the cognitive signal processor.

Thus, thanks to the beamforming module, it is possible to focus the power to the different users involved in the radiocommunication and in some cases even generate a dedicated radio beam for each user. Furthermore, the spatial filtering made by the beamforming module can be used to reduce interferences with other radio spectrum users and to reduce the probability of detection and probability of interception of the radiocommunication. On the other hand, the beamforming module allows shaping the radio beams in such a way that the power leakage is minimum in the spatial directions in which potential spectrum users or listeners might be located.

The cognitive radiocommunication system and method of the present invention preferably comprises at least one beamforming module provided with Antenna Control Unit (ACU) configured to modify the radio beams to be transmitted according to the three-dimensional movement of the aircraft.

Moreover, the cognitive radiocommunication system preferably comprises an aeronautical channel equalizer arranged to correct harmful impairments induced to the received radio beams signal caused by the three-dimensional movement of the aircraft, such as high-speed and aircraft height, which results in doppler and time shift.

This aeronautical channel equalizer might make use of the data received from other cognitive radiocommunication system housed in other aircrafts as well as the information shared by other users inside the radiocommunication network. In case, no information from other network users is available, the proposed system might use digital beamforming techniques along with Direction of Arrival (DoA) algorithms to obtain a position estimation of the networks users. This is achieved, for example, by analysing the phase variation of its pilot signals. In order to compensate the potential delay in the transmitted signals, the cognitive radio system shall coordinate the network users by sharing its expected transmission time. As a receiver, the proposed system shall be able to process the received signal using synchronization techniques knowing the nature of the transmitted signal. Apart from this, the system of the present invention might include the equalization of the radiofrequency channel impairments induced by the particular case of aeronautical mobility conditions.

In a preferred embodiment of the invention, compatible with all other embodiments thereof, the cognitive signal processor is also provided with a spectrum sharing module, configured to share at least the distribution of the available radio spectrum generated by the spectrum decision module to other cognitive radiocommunication systems (or users) which form part of a radiocommunication network. Preferably, the spectrum sharing module is also configured to share with other cognitive radiocommunication systems which form part of a radiocommunication network, at least one of the following:
- position data,
- Quality of Service (QoS) parameters for the data to be transmitted,
- prediction data; or

- decision data including resource distribution, time modulation parameters, frequency modulation parameters or modulation coding parameters to modulate transmitted radio beams or parameters to demodulate incident radio beams.

This spectrum sharing module gathers the decisions taken by the cognitive signal processor and distribute them among the users of the radiocommunication network to enable them to establish high-speed links using the sensed spectrum opportunities without collisions, overlapping or interferences between the users of the radiocommunication network.

To that end, the spectrum sharing module is preferably connected to a sharing transceiver, being the sharing transceiver configured to send at least the distribution of the available radio spectrum generated by the spectrum decision module to other cognitive radiocommunication systems which form part of a radiocommunication network and to receive information from the other cognitive radiocommunication systems which form the radiocommunication network. Thus, thanks to the sharing transceiver, the cognitive radiocommunication system is able to acquire additional information about its environment and the users which form part of a radiocommunication network can exchange information useful for enabling the establishment of high-speed links.

Preferably, the sharing transceiver is also configured to share with other cognitive radiocommunication systems which form part of a radiocommunication network, at least one of the following:
- position data,
- Quality of Service (QoS) parameters for the data to be transmitted,
- prediction data; or
- decision data including resource distribution, time modulation parameters, frequency modulation parameters or modulation coding parameters to modulate transmitted radio beams or to demodulate incident radio beams.

A second object of the present invention refers to an aeronautical cognitive radiocommunication network comprising at least one cognitive network node in the form of said cognitive radiocommunication systems.

In a preferred embodiment, the aeronautical cognitive radiocommunication network of the present invention comprises at least two different cognitive radiocommunication systems in a centralized configuration, a first cognitive radiocommunication system acting as master and a second cognitive radiocommunication system acting as slave. Another embodiment of the aeronautical radiocommunication network according to the present invention comprises at least two different cognitive radiocommunication systems configured to act as nodes inside a distributed configuration. Preferably, both cognitive radiocommunication systems act as intelligent nodes in a distributed network, as they are capable to cognitively performs the tasks independently of the rest of nodes.

A third object of the invention refers to a method for cognitive aeronautical communications, in a cognitive aeronautical radiocommunication network according to the invention and comprising the following steps:
a. sensing the radiofrequency spectrum coming from at least one incident radiowave beam, to identify potential signals inside it,
b. predicting radio spectrum usage in terms of time, frequency and/or space for at least one cognitive radiocommunication system of the network,
c. determining a distribution of the available radio spectrum resources depending on the cognitive network nodes demand and the sensed and predicted information, along with modulation and codification parameters for configuring at least one cognitive radiocommunication system of the network when acting as transmitter or receiver, and
d. sending or receiving the results from the previous step to/from at least one cognitive radiocommunication system of the network.

Preferably, the distribution of the available radio spectrum resources is a suboptimal distribution or an efficient distribution of the available radio spectrum resources.

The method can optionally comprise the following additional step:
e. Configuring the cognitive transceiver by the outcome of decision-making to send/receive the data to/from at least one cognitive radiocommunication system of the network involved according to payload user data.

### Brief description of the drawings

As a means for better understanding at least one embodiment of the present invention, the following set of drawings is introduced by way of schematic illustration and in a non-limitative manner.
Figure 1: shows schematically the architecture of one possible embodiment of a cognitive radiocommunication system, according to the present invention,
Figure 2: shows schematically the internal architecture of the cognitive signal processor used in the cognitive radiocommunication system of Fig. 1.
Figure 3: shows the aircraft cognitive link establishment during its flight, of an aircraft provided with a cognitive radiocommunication system according to the invention, where it supports several radiation beams in parallel.
Figure 4: shows the cognitive radio decision-making scheme within a radiocommunication network according to the invention operating under a centralized decision-making

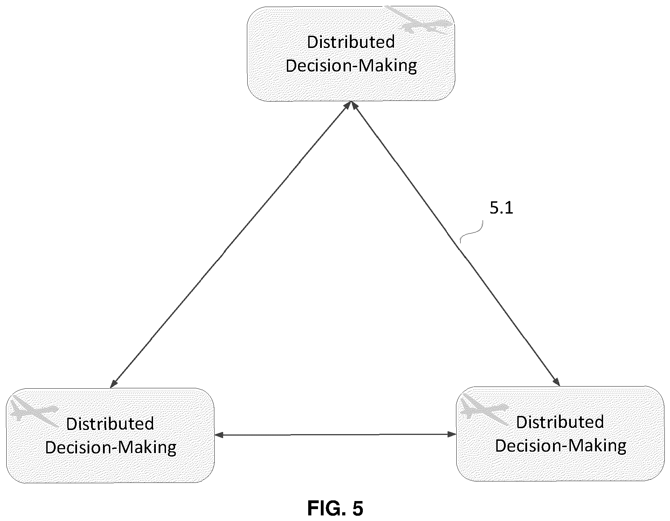

Figure 5: shows the cognitive decision made in a distributed manner among the cognitive radiocommunication systems of a radiocommunication network according to the invention.

### Detailed description of the invention

Throughout the description, the same alphanumeric references are used to designate the same or similar elements.

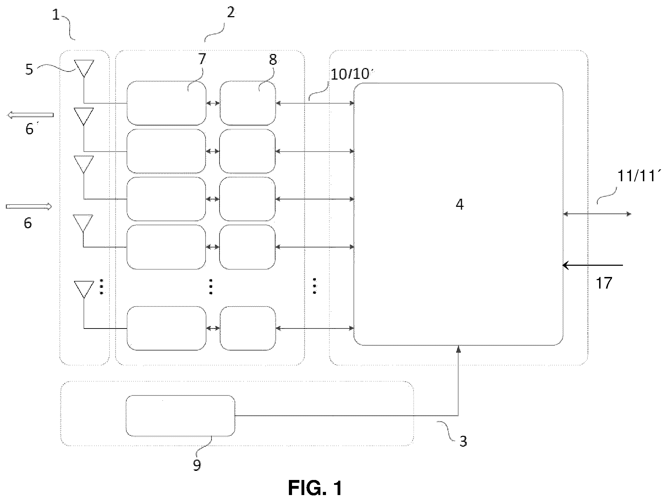

Figure 1 depicts one possible embodiment of a cognitive radiocommunication system, according to the present invention and which in this particular case is intended to be housed in an aircraft.

The cognitive radiocommunication system of Fig. 1 comprises an antenna system 1, formed by a plurality of radiating elements 5, when the module acts as transmitter, a transmitted radio beam 6' is transmitted within the radio spectrum. The actual number of radiating elements 5 may vary depending on the specific application.

Thanks to the existence of various radiating elements 5 which, in turn, can be of different types, and can have different array geometries and feeding weights, it is possible to produce a configurable radiation pattern. Consequently, this cognitive radiocommunication system is able to generate several different transmitted radio beams and to real-time adapt their shape to point to specific directions besides creating radiation nulls and reduce interferences in others spatial directions. In this particular embodiment of the invention, which is compatible with all possible embodiments thereof, this is achieved by the cognitive signal processor 4 (which will be described in further detail below) through computing and applying the specific weights for feeding the different radiating elements 5 of the antenna system 1 based on the required radiation pattern to be generated.

The cognitive radiocommunication system also comprises a plurality of radiofrequency transmitter-receiver units 7,8, each transmitter-receiver units 7, 8 being associated to one radiating element 5. In addition, each transmitter-receiver unit 7,8 is connected to the cognitive signal processor 4, which will be described in detail below.

The transmitter-receiver units 7,8 are configured as follows: when the radiocommunication module acts as a receiver each transmitter-receiver unit 7,8 receives an incident radio beam 6 and send it to the cognitive signal processor 4. Conversely, when the radiocommunication module acts as a transmitter, each transmitter-receiver unit 7, 8 receives a transmission signal 10' coming from the cognitive signal processor an send it to one of the radiating elements for generating a transmitted radio beam 6'.

In this particular case, which is compatible with all embodiments of the invention, each transmitter-receiver unit comprises a frequency up/down- conversion unit 7 and an analog-digital converter 8, connected in series with each other, and the set of transmitter-receiver units is designated with reference 2.

The up/down-conversion unit 7 receives incident radio beams 6 amplify them and filters them in predetermined bandwidth and finally, down-converts them to an intermediate frequency before sending them to the analog-digital converter. Afterwards, the analog to digital converter 8 digitalizes the resulting radio signals thereby creating digital signals 10 and sends them to the cognitive signal processor 4, where they are digitally processed. Conversely, when the cognitive radiocommunication system works as a transmitter, the transmission signals 10' coming from the processed digital signal are converted to an analog signals and frequency up-converted, filtered and amplified, so they are ready to be transmitted by the corresponding radiating element 5 as transmitted radio beams 6.

Other beamforming techniques can be used by the cognitive radiocommunication system of the present invention, such as analog and hybrid strategies. In such cases, it is possible to reduce the number of RF transceivers and receivers, depending on the hardware configuration, at the expense of reducing the digital beamforming degrees of freedom.

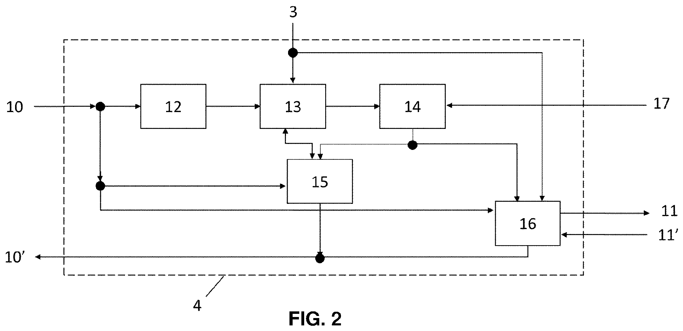

The cognitive radiocommunication system might also comprises a sharing transceiver (not visible in Fig. 1, but depicted in Fig.2), configured to send the distribution of the available radio spectrum generated by the spectrum decision module of the cognitive signal processor 4 to other cognitive radiocommunication systems, which in this particular case are housed in other aircrafts and form part of a radiocommunication network. The sharing transceiver, is also configured to receive external information 10 from the other cognitive radiocommunication systems of the radiocommunication network. External information 3 is in this case information regarding the aircrafts which have on board the other cognitive radiocommunication systems, such as their position, altitude, attitude and speed

In this particular case, the cognitive radiocommunication systems require a time reference signal 3 for synchronization purposes. This signal can be acquired through internal communication withing the aircraft avionics systems or through a dedicated device 9 such as a Global Navigation Satellite System (GNSS), inertial positioning or other dedicated sensors.

The core of the cognitive radiocommunication system shown in Fig. 1 is the cognitive signal processor 4 which comprises a series of modules, that are shown in more detail in Figure 2.

Thus, the first module of the cognitive signal processor 4 is the spectrum sensing module 12, which receives the digital radio signals 10, resulting from the amplification, filtering, downconversion and subsequent digitalization of the incident radio beams.

The spectrum sensing module 12 is configured for analyzing the spectrum of digital radio signals 10 (and consequently, of each incident radio beam 6 in Fig.1) and identifying and classifying received signals while detecting unused bandwidth within the radio spectrum. It includes a beamforming module, which generates different signals streams from different radiation patterns before they are given to the spectrum sensing functionality. It is also capable of classifying received radiofrequency signals into three different signal types. A potential classification use might be: in-network emissions (that is, emissions coming from the same radio radiocommunication network), out-network emissions (emissions in the same radio frequency spectrum but which do not come from other users of radiocommunication network), and harmful emissions (such as interferences).

With the beamforming module, the equalization of channel is needed in order to compensate the impairments created due to the aeronautical environment and mobility conditions.

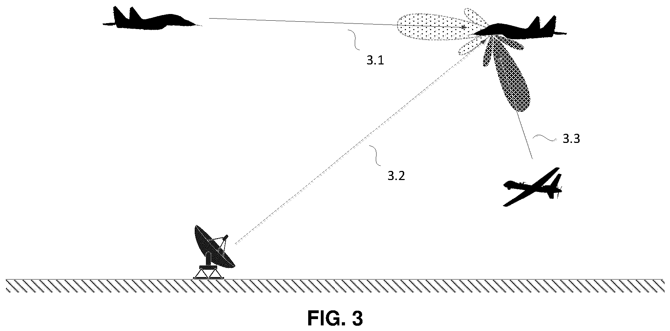

For the aim of exploiting the space dimension, in this particular embodiment of the invention an airborne antenna array system is included in the aircraft along with an on-board cognitive radiocommunication system to control it. The radiation pattern of the system is crucial for several topics: the radio link establishment; interference reduction over primary users; and pattern beamforming to minimize the radiated power in the specific direction in which the system aims to reduce the probability of being detected or intercepted. Fig. 3 illustrates the aircraft cognitive link establishment during its flight, where the cognitive system supports several radiation patterns beams in parallel. In reception, the beams are intended to sense the spectrum in different spatial directions. Then, the spectrum sensing module 12 is able to detect and classify emissions and its arrival direction thanks to these parallel sensing beams, as shown in 3.1. The radiofrequency spectrum received from each beam/spatial direction is processed and used for shaping the dedicated beam used for the cognitive link establishment 3.3. This beam 3.3 is shaped in such a way that focuses its gain on the cognitive user receiver, while it reduces and try to minimize the radiated power over the sensed radiofrequency primary users 3.1 and 3.2. This beamforming technique aims to avoid being detected and intercepted by potential harmful users 3.1 as well as to avoid interfering primary communications 3.2.

Two different techniques could be used, for example and without being limitative, when sensing the spectrum: signal identification and/or radio signature. Whereas the signal identification tries to recognize the waveform of incident radio beams 6 (Fig. 1) coming from other cognitive radiocommunication systems which form part of the radiocommunication network (and in such a way identify if the transmitter is known), the radio signature technique intends to recognize the transmitter (i.e., the cognitive radiocommunication system itself), since hardware installed in said module usually creates some unique impairments and the radio signal has certain features resulting in small differences with respect to the others transmitters.

The spectrum sensing module 12 (Fig. 2) may include, in any embodiment of the invention, first processing means capable of executing algorithms for spectrum sensing techniques. Nevertheless, the spectrum sensing module 12 preferably employs a first dedicated Artificial Intelligence (AI) model for performing these spectrum sensing techniques usually with better performances in high-speed congested spectrum scenarios. This invention includes both Al spectrum sensing and non-Al spectrum sensing approaches as long as they provide the required accuracy for the sensing purpose. In case other cognitive network users share their sensing information, this module shall also perform the appropriate data fusion to increase the accuracy of the sensing output.

Information obtained by the spectrum sensing module 12 is then sent to a spectrum prediction module 13, configured for finding trends in the radio spectrum. Similarly, spectrum prediction module 13 may include, in any embodiment of the invention, second processing means capable of executing prediction algorithms for trying to find trends and specific behaviours inside the received spectrum.

This invention includes both Al spectrum sensing and non-Al spectrum sensing approaches as long as they provide the required accuracy for this purpose. The spectrum prediction module 13 may also employ a dedicated predictive model for performing these prediction tasks, in order to improve the accuracy of the prediction taking advantage of previous measurements in different spatial dimensions. The cognitive process (included the prediction) is done by the central node for all the users of the cognitive network (in case of a centralized decision) or by each user (in case of a distributed decision). The prediction module shall take this data along with the previous spectrum status storage in the dedicated database to learn and compute the prediction for the time, frequency and spatial dimension based on the implemented prediction algorithm. These algorithms try to find patterns on the signals and spectrum behavior to generate a spectrum estimation at the time of the link establishment.

The third module of the cognitive signal processor 4 is the spectrum decision module 14 the spectrum decision module 14 distributes the available radio spectrum depending on the transmission demand and the information obtained by the spectrum sensing module 12 and the spectrum prediction module 13. It also takes into consideration the demand according to the different network user requirements such as data rate, data size, priority, quality of service (QoS), etc. In this embodiment of the invention, the spectrum decision module 14 determines the most appropriate distribution for the available radio spectrum depending on the cognitive network nodes demand, which form part of the radiocommunication network and the information obtained by the spectrum sensing module, as well as from information obtained in the previous cognitive modules. The spectrum decision module 14 also provides the cognitive transceiver 16 with the most appropriate modulation and codification parameters which will be used for generating -when the radiocommunication system acts as a transmitter- the transmitted signal, and for configuring -when the radiocommunication system acts as a receiver- the cognitive transceiver with said demodulation and decoding parameters.

For this purpose, the spectrum decision module 14 acting as master in the network acts as a scheduler of the spotted spectrum opportunities, taking available opportunities and allocating them to the different users according to their reported needs in a dynamic and optimal way. As a result, each user is assigned with a portion of the available resources. Each portion might have an associated waveform and target power depending on both the quality of the sensed opportunity and the user demands. The resources are allocated among the cognitive users according to the notified priority, policy, QoS and transmission. In case it is priority based, the best resources shall be allocated first to those cognitive users with the highest priority. However, priority could also be based on the criticality of the data to be transmitted. Once the resources are allocated to each user, the module selects the waveform to be used to transmit the data according to the notified requirements 17. This module may also take shared data from other aircraft systems (or cognitive users) to know the position of the aircraft and, in case the cognitive users share their location inside the network, the system described in Figs 1 and 2 shall compute the weights for the digital beamforming. In case the location is not shared among the cognitive users, the system shall obtain the location of the cognitive users and the detected signals through Direction of Arrival (DoA) algorithms. For the weights computation, the system may analyse the information received from other modules and decide which of the detected signals might be considered potential interferes. The beam might be shaped in such a way to reduce the leakage of power to those unwanted spatial directions, at the same time that it reduces the emissions which could interfere the signals detected in the sensed spectrum. The cognitive radiocommunication system stores frequency regulations and constraints which are also used by this module to perform its decisions. It is worth mentioning that, to support the decision-making process, the spectrum decision module 14 needs the prediction and the policies or constraints for certain assets as well as their QoS and transmission requirements.

As commented, this spectrum decision module 14 also computes the weights for the required beamforming for each spatial direction in which the links will be established. The decision is taken in such a way that whenever a change in the spectrum is detected and some of the spectrum opportunities being used by the cognitive network are not available anymore, the system is able to immediately adapt to it and perform a new distribution to free the piece of spectrum. In order to provide an optimal solution to the co-existence among the cognitive users through the scheduling and resource allocation process, an Artificial Intelligent (AI) solution can be implemented, even though non-Al approaches could also produce suitable performances.

In the system described in Figs 1 and 2, when the radiocommunication module acts as transmitter, a cognitive transceiver 16 uses as input first, the user payload data 11', and second, the distribution of the available radio spectrum generated by the spectrum decision module 14 for generating a transmission signal 10' for each radio beam to be transmitted, and for transmitting each transmission signal 10' to a corresponding radiofrequency transmitter-receiver unit 7, 8. For the transmission or reception, the data 10' is sent after being processed or received and then processed by the beamforming unit within cognitive transceiver 16.

The cognitive radiocommunication system described in Figs 1 and 2 is also provided with a spectrum sharing module 15, configured to share the distribution of the available radio spectrum generated by the spectrum decision module 14 to the other cognitive radiocommunication systems which form part of a radiocommunication network. It might also receive and/or share the position, altitude, attitude and speed from the cognitive users.

In this embodiment of the invention, the spectrum sharing module 15 gathers the decisions taken by the cognitive signal processor 4 and distribute them among the users of the radiocommunication network to enable them to establish high-speed links using the sensed spectrum opportunities without collisions, overlapping or interferences between the users of the radiocommunication network. This module also interfaces with the sharing transceiver 15.

To that end, the spectrum sharing module 15 is preferably connected to a sharing transceiver 15. The sharing transceiver is configured to send the distribution of the available radio spectrum generated by the spectrum decision module 14 to other cognitive radiocommunication systems which form part of a radiocommunication network and to receive information from the other cognitive radiocommunication systems which form part of the radiocommunication network. Thus, thanks to the sharing transceiver 15, the cognitive radiocommunication system is able to acquire additional information about its environment and the users which form part of a radiocommunication network can exchange the information useful for enabling the establishment of high-speed links. In a potential embodiment, it might be an independent transceiver which modulates this information using a dedicated waveform. The waveform shall grant security capabilities to be undetectable to receivers outside the network. Only the networks users who know the properties of the waveform shall be able to detect and decode it. Before transmitting the signal of after receiving the signal, the module applies beamforming in order to process the data within the appropriate spatial directions.

The proposed radiocommunication network considers both cooperative/non-cooperative or collaborative/non- collaborative modes of operation, depending on the aircraft missions. In the cooperative mode, the different radiocommunication systems which form part of the aeronautical radiocommunication network share information and resources among aircraft to improve the overall network performance. In this case radiocommunication systems can cooperate by sharing information about their spectrum sensing results and the information is storage in the spectrum Information data base in the Spectrum Sensing and Decision modules. If one cognitive radiocommunication systems detects a spectrum opportunity, it can inform the other network nodes, enabling them to make better decisions on channel selection and to avoid interference. The goal of cooperation is to enhance spectrum sensing, improve spectrum utilization, and minimize interference by leveraging the collective intelligence of the cognitive radio network.

However, in the collaborative mode, the different radiocommunication systems which form part of the aeronautical radiocommunication network actively work together to achieve a common goal, such as optimizing spectrum usage or improving network efficiency. Collaborative spectrum sensing is a common example where the cognitive radiocommunication systems form part of the aeronautical radiocommunication network share their sensing results and collectively make decisions about which spectrum opportunities are available. This collaborative decision-making process helps to obtain more accurate spectrum access decisions. The purpose of collaboration aims to achieve higher-level tasks that require joint efforts, such as dynamic spectrum access, distributed decision-making, and adaptive transmission strategies to improve the overall network performance. This collaboration entails in distributing the complete spectrum aircraft information among all the systems in the network taking advantage of their spectrum sharing modules (15). If all the aircraft have the same implementation of the cognitive radiocommunication system, the decision making will provide the same result for each of them, and as a consequence it can be used as centralized or distributed decision-making, having the collaborative/non collaborative or cooperative/non-cooperative outcome as a result of the Decision module (14). As it was stated before, the employment of one or another approach depends highly on the aircraft mission requirements.

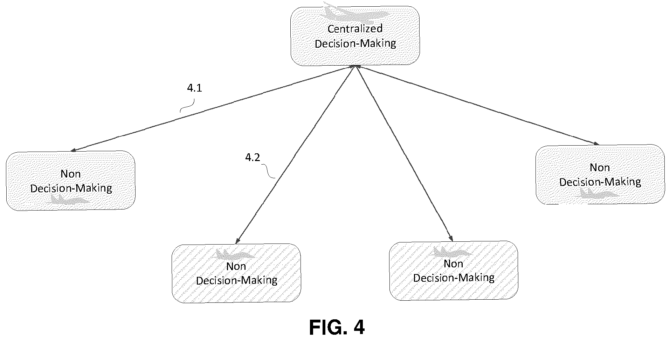

For illustrative purposes, Fig.4 shows the cognitive radio process within a cognitive radiocommunication network according to the invention operating according to a centralized decision-making. In this case, all the cognitive radiocommunication systems sense the spectrum, but only the information is shared with those with collaborative/cooperative purposes 4.1. A centralized cognitive radiocommunication system perform the dynamic spectrum access decision for the assets and such outcome is sent to remaining radiocommunication systems inside the network, even the non-collaborative/non-cooperative ones 4.2.

In the scenarios where the cognitive radiocommunication network operates so that the cognitive decision is made in a distributed manner, the information is shared between all the cognitive radiocommunication systems inside the network 5.1, allowing the cognitive radio systems to perform the decision. It is assumed that all the cognitive radiocommunication systems of the distributed network have the same cognitive radio system in order to obtain the same individual result. Then, each individual cognitive radiocommunication system computes the decision process inside them without informing the other systems in the network. As a consequence, the data can be sent among the network nodes using the proper time/frequency/space resources and waveform between each pair of assets. This distributed network improves the accuracy and efficiency of the cognitive process whereas additional delay is induced due to the exchanging information among users.

The novel method allows the use of cognitive techniques to take decisions on waveform, power, resource allocation and spatial directions in order to create a more efficient and reliable communication from/to an aircraft to/from other assets (air, space or ground). This method is based on a collaborative/cooperated way of sharing the spectrum information and establishing the decision-making among the parties involved thanks to the spectrum analysis and decision, spectrum sharing module and user data processing and transmission/reception.

## Claims

1. Cognitive radiocommunication system intended to be used in an aeronautical cognitive radiocommunication network, **characterized in that** said radiocommunication system is housed in an aircraft and comprises:
- an antenna system (1), including at least one radiating element (5);
- at least one radiofrequency transmitter-receiver unit (7, 8) connected to a cognitive signal processor (4) and configured -when the cognitive radiocommunication system acts as a receiver- for receiving an incident radio beam (6) and send it to the cognitive signal processor (4) and being also configured -when the cognitive radiocommunication system acts as a transmitter - for receiving a transmission signal (10') from the cognitive signal processor an send it to the antenna system for generating a transmitted radio beam (6');
- a cognitive signal processor (4); provided at least with the following modules:
i) a spectrum sensing module (12), for analyzing the spectrum of each incident radio beam (6) and identifying and classifying received signals while detecting unused bandwidth within the radio spectrum;
ii) a spectrum prediction module (13), for finding trends in the radio spectrum, based on the information obtained by the spectrum sensing module; and
iii) a spectrum decision module (14), for determining a distribution for the available radio spectrum depending on the radiocommunication network transmission demand and the information obtained by the spectrum sensing and prediction modules and for configuring one or more cognitive transceivers (16), by providing cognitive transceivers (16) with modulation and codification parameters which will be used for generating -when the radiocommunication system acts as a transmitter- the transmission signal, and for configuring -when the radiocommunication system acts as a receiver- cognitive transceivers with said modulation and coding parameters;
- a cognitive transceiver (16), configured -when the radiocommunication module acts as transmitter- for generating a transmission signal (10') for each radio beam to be transmitted, using as input the output of the spectrum decision module and the data to be transmitted and -when the radiocommunication module acts as receiver- for decoding the incident radio beam, using as input the incident radio beam and the information coming from outputs of the spectrum decision module (14).

2. Cognitive radiocommunication system according to according to claim 1, wherein the antenna system (1), includes at least two radiating elements (5), each radiating element (5), and one radiofrequency transmitter-receiver unit ( 7, 8), comprises a beamforming module, said beamforming module being configured -when the radiocommunication module acts as transmitter- for generating parallel transmitted radio beams (6') pointing at specific directions and being configured -when the radiocommunication module acts as a receiver- for generating independent signal samples (10) corresponding to different radiation patterns representing each radio beam which are filtered at predefined bandwidths and down-converted to an intermediate frequency before being sent to the cognitive signal processor (4).

3. Cognitive radiocommunication system according to according to claim 2, wherein the beamforming module is provided with antenna control unit configured to modify the radio beams (6') to be transmitted according to the three-dimensional movement of the aircraft.

4. Cognitive radiocommunication system according to any previous claim, wherein the radiocommunication module also comprises an aeronautical channel equalizer arranged to correct harmful impairments induced to the received radio beams caused by the three-dimensional movement of the aircraft.

5. Cognitive radiocommunication system according to any previous claim, wherein the cognitive signal processor is also provided with a spectrum sharing module (15), configured to share at least the distribution of the available radio spectrum generated by the spectrum decision module to other cognitive radiocommunication systems which form part of a radiocommunication network.

6. Cognitive radiocommunication system according to claim 5, wherein the spectrum sharing module (15) is also configured to share with other cognitive radiocommunication systems which form part of a radiocommunication network, at least one of the following:
- position data,
- Quality of Service (QoS) parameters for the data to be transmitted,
- prediction data; or
- decision data including resource distribution, time modulation parameters, frequency modulation parameters or modulation coding parameters to modulate transmitted radio beams or to demodulate incident radio beams.

7. Cognitive radiocommunication system according to any of claims 5 or 6, wherein the spectrum sharing module is connected to a sharing transceiver, the sharing transceiver being configured to send at least the distribution of the available radio spectrum generated by the spectrum decision module to other cognitive radiocommunication systems which form part of the radiocommunication network and to receive information from the other cognitive radiocommunication systems which form part of the radiocommunication network.

8. Cognitive radiocommunication system according to claim 7, wherein the sharing transceiver is also configured to share with other cognitive radiocommunication systems which form part of the radiocommunication network, at least one of the following:
- position data,
- Quality of Service (QoS) parameters for the data to be transmitted,
- prediction data; or
- decision data including resource distribution, time modulation parameters, frequency modulation parameters or modulation coding parameters to modulate transmitted radio beams or to demodulate incident radio beams.

9. Aeronautical cognitive radiocommunication network comprising at least one cognitive network node in the form of a cognitive radiocommunication system according to any of claims 1 to 8.

10. Aeronautical cognitive radiocommunication network according to claim 9 comprising at least two different cognitive radiocommunication systems in a centralized configuration, a first cognitive radiocommunication system acting as master and a second cognitive radiocommunication system acting as slave.

11. Aeronautical cognitive radiocommunication network according to claim 9 comprising at least two different cognitive radiocommunication systems, acting both as intelligent nodes in a distributed network.

12. Aeronautical communications method, used in an aeronautical cognitive radiocommunication network according to any of claims 9 to 11, comprising the following steps:
a. sensing the radiofrequency spectrum coming from at least one incident radiowave beam (6), to identify the potential signals inside it;
b. predicting radio spectrum usage in terms of time, frequency and/or space for at least one cognitive radiocommunication system of the network;
c. determining a distribution of the available radio spectrum resources depending on the cognitive network nodes demand and the sensed and predicted information, along with modulation and codification parameters for configuring at least one cognitive radiocommunication system of the network when acting as transmitter or receiver; and
d. Sending or receiving the results from the previous step to/from at least one cognitive radiocommunication system of the network.

13. Aeronautical communications method, according to claim 12, comprising the following additional step:
e. Configuring the cognitive transceiver by the outcome of decision-making to send/receive the data to/from at least one cognitive radiocommunication system of the network involved according to payload user data.
